(19) Europäisches Patentamt
European Patent Office
Office européen des brevets

(11) **EP 2 551 132 B1**

(12) # EUROPÄISCHE PATENTSCHRIFT

(45) Veröffentlichungstag und Bekanntmachung des Hinweises auf die Patenterteilung:
**18.11.2015   Patentblatt 2015/47**

(51) Int Cl.:
**B60D 1/30** *(2006.01)*      **B60D 1/62** *(2006.01)*

(21) Anmeldenummer: **12005102.4**

(22) Anmeldetag: **11.07.2012**

(54) **Verfahren und Vorrichtung zur Bestimmung einer Gesamtlänge eines Anhängers**

Method and device for determining the total length of a trailer

Procédé et dispositif de détermination de la longueur totale d'une remorque

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2011   DE 102011108440**

(43) Veröffentlichungstag der Anmeldung:
**30.01.2013   Patentblatt 2013/05**

(73) Patentinhaber: **Volkswagen Aktiengesellschaft 38440 Wolfsburg (DE)**

(72) Erfinder:
• **Hüger, Philipp**
  **38471 Rühen (DE)**
• **Kirchner, Alexander, Dr.**
  **38104 Braunschweig (DE)**
• **Stüker, Dirk, Dr.**
  **30900 Wedemark (DE)**

(56) Entgegenhaltungen:
**EP-A1- 2 272 691          DE-A1-102004 059 596
DE-A1-102008 045 436    DE-A1-102009 007 990
US-A1- 2011 050 903**

EP 2 551 132 B1

**Beschreibung**

Die Erfindung betrifft ein Verfahren und eine Vorrichtung zur Bestimmung einer Gesamtlänge eines Anhängers eines Fahrzeuggespanns.

Ein Fahrzeuggespann umfasst in der Regel ein Zugfahrzeug und einen Anhänger. Ein Führen des Fahrzeuggespanns, insbesondere eine Rückwärtsfahrt mit dem Fahrzeuggespann, kann für einen Zugfahrzeugführer problematisch sein, da das Fahrzeuggespann aufgrund der Kopplung des Zugfahrzeuges mit dem Anhänger über zusätzliche Bewegungsfreiheitsgrade verfügt.

Für Fahrzeuge und auch Fahrzeuggespanne sind Fahrerassistenzsysteme bekannt, die ein Führen des Fahrzeugs oder des Fahrzeuggespanns unterstützen, beispielsweise durch die Ausgabe von visuellen, akustischen und/oder haptischen Lenkempfehlungen.

Für eine korrekte Funktion eines solchen Fahrerassistenzsystems für Fahrzeuggespanne ist es notwendig, geometrische Abmessungen des Fahrzeuggespanns zu kennen oder während eines Betriebes des Fahrzeuggespanns zu bestimmen. Solch geometrische Daten des Anhängers umfassen beispielsweise eine Spurweite des Anhängers, einen anhängerseitigen Achse-Kupplung-Abstand und eine Gesamtlänge des Anhängers.

Die EP 1 593 552 B1 offenbart ein System zur Überwachung von Kraftfahrzeuganhängern im Fahrbetrieb. Hierbei offenbart die Druckschrift auch eine Bestimmung einer Deichsellänge während einer Kalibrierungsfahrt. Die Deichsellänge wird bei einer stabilen Kurvenfahrt bei niedriger Geschwindigkeit aus bekannten Winkelverhältnisbeziehungen ermittelt. Die Deichsellänge bezeichnet hierbei den Abstand des Anhängerkupplungsaufnahmepunkts zur Anhängerradachse.

Die DE 10 2009 007 990 A1 Offenbart den Oberbegriff von Anspruch 8.

Es ist wünschenswert, zusätzlich zu dem anhängerseitigen Achse-Kupplung-Abstand (Deichsellänge) auch eine Gesamtlänge des Anhängers zu bestimmen.

Es stellt sich das technische Problem, ein Verfahren und eine Vorrichtung zur Bestimmung einer Gesamtlänge eines Anhängers eines Fahrzeuggespanns zu schaffen, welche eine einfache und wenig rechenintensive Bestimmung einer unbekannten Gesamtlänge eines Anhängers eines Fahrzeuggespanns ermöglichen.

Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen.

Vorgeschlagen wird ein Verfahren zur Bestimmung einer Gesamtlänge eines Anhängers eines Fahrzeuggespanns. Das Fahrzeuggespann umfasst ein Zugfahrzeug und den mit dem Zugfahrzeug gekoppelten Anhänger. Der Anhänger ist hierbei vorzugsweise ein einachsiger Anhänger. Das Zugfahrzeug weist eine Anhängerkupplung auf, die über einen beispielsweise teilkugelförmigen Kupplungskopf verfügen kann. Der Anhänger weist eine Kupplungskopfaufnahme auf. Zum Kuppeln des Zugfahrzeugs mit dem Anhänger nimmt die Kupplungskopfaufnahme den Kupplungskopf auf, wodurch der Anhänger schwenkbar um den Kupplungskopf an dem Zugfahrzeug mechanisch befestigt wird.

In einem ersten Schritt wird ein anhängerseitiger Achse-Kupplung-Abstand bestimmt. Der anhängerseitige Achse-Kupplung-Abstand bezeichnet hierbei einen Abstand eines Mittelpunkts der Kupplungskopfaufnahme zu einer Anhängerachse oder einem Mittelpunkt der Anhängerachse entlang einer zentralen Längsachse des Anhängers.

Der anhängerseitige Achse-Kupplung-Abstand kann hierbei vorbekannt sein oder während eines Betriebs des Fahrzeugspanns bestimmt werden, beispielsweise mittels des in der EP 1 593 552 B1 beschriebenen Verfahrens.

Erfindungsgemäß wird in einem zweiten Schritt während einer konstanten oder quasi-konstanten Kreisfahrt des Fahrzeuggespanns ein Bewegungsvektor einer Bewegung eines Hecks des Anhängers bestimmt. Ein Heck des Anhängers bezeichnet hierbei das der Kupplungskopfaufnahme des Anhängers entlang der zentralen Längsachse gegenüberliegende Ende des Anhängers. Dies kann auch als hinteres Ende des Anhängers bezeichnet werden. Der Bewegungsvektor repräsentiert eine Richtung und eine Geschwindigkeit des Hecks des Anhängers relativ zu einer von dem Anhänger überfahrenen Fahrbahnoberfläche. Hierbei repräsentiert eine Länge oder ein Betrag des Vektors die Geschwindigkeit und die Orientierung des Vektors die Richtung der Bewegung des Anhängers bezüglich eines anhängerfesten Koordinatensystems. Das anhängerfeste Koordinatensystem kann beispielsweise eine erste Koordinatenachse aufweisen, die parallel zu der zentralen Längsachse des Anhängers verläuft, und eine zweite Koordinatenachse aufweisen, die senkrecht zur ersten Koordinatenachse orientiert ist und parallel zur Anhängerachse verläuft. Ein Ursprung dieses Koordinatensystems kann beispielsweise an einem Schnittpunkt der zentralen Längsachse des Anhängers mit dem heckseitigen Ende, beispielsweise einer Heckfläche, gegeben sein.

In Abhängigkeit der Richtung und der Geschwindigkeit wird dann ein anhängerseitiger Achse-Heck-Abstand bestimmt. Der anhängerseitige Achse-Heck-Abstand bezeichnet hierbei einen Abstand der Anhängerachse oder dem Mittelpunkt der Anhängerachse von dem Heck entlang der zentralen Längsachse des Anhängers. Dieser Abstand kann auch gegeben sein durch einen Abstand der Anhängerachse von einer Ebene, deren Normalenvektor parallel zur zentralen Längsachse des Anhängers verläuft und die zumindest teilweise die Heckfläche des Anhängers ausbildet. Beispielsweise kann der vorhergehend beschriebene Ursprung des Bezugskoordinatensystems in dieser Ebene liegen.

Die Gesamtlänge bestimmt sich dann als Summe des im ersten Schritt bestimmten anhängerseitigen Achse-Kupplung-Abstands und des im zweiten Schritt bestimmten anhängerseitigen Achse-Heck-Abstands.

Hierdurch ergibt sich in vorteilhafter Weise, dass während eines Betriebs eines Fahrzeuggespanns eine unbekannte Gesamtlänge eines beliebigen Anhängers in einfacher und rechentechnisch wenig intensiver Weise bestimmt werden kann. Die Gesamtlänge kann dann einem Fahrerassistenzsystem zur Verfügung gestellt werden, welches somit in vorteilhafter Weise eine korrekte und genaue Unterstützung einer Führung des Fahrzeuggespanns ermöglichen kann, beispielsweise durch die Ausgabe von visuellen, akustischen und/oder haptischen Lenkempfehlungen.

In einer weiteren Ausführungsform wird der Bewegungsvektor in einen ersten Teilvektor und einen zweiten Teilvektor unterteilt. Der erste Teilvektor repräsentiert eine Geschwindigkeit des Hecks des Anhängers in Längsrichtung des Anhängers, also in Richtung der, zentralen Längsachse des Anhängers. Der zweite Teilvektor repräsentiert eine Geschwindigkeit des Hecks des Anhängers senkrecht zur Längsrichtung des Anhängers und parallel zur Anhängerachse. Somit wird ein Bewegungsvektor in Teilvektoren, die parallel zu den vorhergehend beschriebenen Koordinatenachsen des Bezugskoordinatensystems verlaufen, aufgeteilt. Der anhängerseitige Achse-Heck-Abstand kann dann in Abhängigkeit des ersten und des zweiten Teilvektors, insbesondere in Abhängigkeit einer Länge oder eines Betrages des ersten und des zweiten Teilvektors bestimmt werden.

Hierdurch ergibt sich in vorteilhafter Weise eine besonders einfache Bestimmung des anhängerseitigen Achse-Heck-Abstands.

In einer weiteren Ausführungsform wird der anhängerseitige Achse-Heck-Abstand als Produkt eines Radius der konstanten oder quasi-konstanten Kreisfahrt und einem Geschwindigkeits-Quotienten bestimmt, wobei ein Dividend des Geschwindigkeits-Quotienten der zweite Teilvektor und der Divisor des Geschwindigkeits-Quotienten der erste Teilvektor ist. Hierdurch ergibt sich in vorteilhafter Weise eine einfach zu implementierende Rechenvorschrift zur Bestimmung des anhängerseitigen Achse-Heck-Abstands.

In einer weiteren Ausführungsform wird der Bewegungsvektor kamerabasiert erfasst. Hierbei ist eine Kamera derart angeordnet, dass diese Kamera eine Bewegung des Hecks des Anhängers relativ zu einer überfahrenen Fahrbahnoberfläche erfassen kann. Mittels bekannter Bildverarbeitungsverfahren, beispielsweise so genannter Structure-and-Motion-Verfahren, kann aus den von der Kamera wiederholt erfassten Bilddaten der vorhergehend beschriebene Bewegungsvektor bestimmt werden.

Hierdurch ergibt sich eine besonders einfache Bestimmung des Bewegungsvektors, wobei mit der vorgeschlagenen Kamera ebenfalls weitere im Betrieb des Fahrzeuges oder Fahrzeuggespanns erwünschte Verfahren, z.B. eine Abstandserkennung, durchgeführt werden können.

Ein anderes mögliches Verfahren zur kamerabasierten Ermittlung des Bewegungsvektors ist die Bestimmung des optischen Flusses. Dabei wird aus zwei zeitlich versetzten Bildern ein pixelbezogenes Vektorfeld ermittelt, wobei die Vektoren die Bewegung der Pixel darstellen. Diese Pixelbewegungsvektoren müssen dann noch über einen Skalierungsfaktor in eine Absolut-Bewegung umgerechnet werden. Beispielsweise kann der Skalierungsfaktor bei einer Geradeausfahrt bestimmt werden. Dazu werden beispielsweise zwei Bilder aufgenommen, und aus der Bewegung der Pixel und der bekannten Fahrzeuggeschwindigkeit der Skalierungsfaktor bestimmt. Der Vorteil des Verfahrens mittels des optischen Flusses ist geringe benötigte Rechenleistung, da keine Objekterkennung und Wiedererkennung erfolgen muss.

In einer bevorzugten Ausführungsform ist eine Kamera zur Erfassung des Bewegungsvektors an dem Heck des Anhängers angeordnet. Hierbei ist die Kamera also ortsfest mit dem Heck des Anhängers verbunden. Erfasst die Kamera nun eine Fahrbahnoberfläche, ist also ein Erfassungsbereich der Kamera derart angeordnet, dass dieser Erfassungsbereich zumindest teilweise eine Fahrbahnoberfläche abdeckt, so kann der vorhergehend beschriebene Bewegungsvektor direkt aus den wiederholt mittels der Kamera gewonnenen Bilddaten der Fahrbahnoberfläche bestimmt werden. Hierbei können Bilddaten der Kamera mit einer vorbestimmten Frequenz, beispielsweise 30 Bilder pro Sekunde (30 fps) oder 60 fps bestimmt werden. In jedem dieser Bilder z.B. können mittels bekannter Objektdetektionsverfahren Objekte, z.B. so genannte Landmarken, detektiert werden. Wird ein in einem ersten Bild erstmals detektiertes Objekt in einem oder mehreren nachfolgenden Bildern erneut detektiert, so kann aus der bekannten Zeitdauer zwischen den Bildern und der pixelbezogenen Verschiebung des Objekts in den Bildern.der vorhergehend beschriebene Bewegungsvektor bestimmt werden, falls die Kamera bezüglich der Fahrbahnoberfläche kalibriert ist, also eine Position und Orientierung sowie innere und äußere Kameraparameter der Kamera bekannt sind. Alternativ kann das zuvor beschriebene Verfahren des optischen Flusses zur Anwendung kommen.

Hierdurch ergibt sich in vorteilhafter Weise, dass eine am Heck des Anhängers angeordnete Kamera, die beispielsweise auch zur Erzeugung visueller Daten bei einer Rückwärtsfahrt des Fahrzeuggespanns genutzt wird, auch zur erfindungsgemäßen Bestimmung der Gesamtlänge des Anhängers genutzt werden kann. Weiter ergibt sich aufgrund der ortsfesten Anordnung der Kamera am Heck des Anhängers in vorteilhafter Weise, dass keine zusätzliche Bestimmung einer Bewegung des Hecks des Anhängers notwendig ist.

In einer weiteren Ausführungsform wird zur Bestimmung des anhängerseitigen Achse-Kupplung-Abstands ein Radlenkwinkel und ein Anhänger-Knickwinkel erfasst. Der Radlerikwinkel bezeichnet hierbei einen Winkel zwischen einer Ausrichtung von lenkbaren Rädern des Zugfahrzeugs zu einer zentralen Längsachse des Zugfahrzeuges. Der Anhänger-Knickwinkel bezeichnet hierbei einen Winkel zwischen den zentralen Längsachsen des Zugfahrzeugs und des Anhängers.

Weiter ist ein fahrzeugseitiger Radstand vorbekannt oder wird der fahrzeugseitige Radstand bestimmt. Der Radstand bezeichnet hierbei einen Abstand zwischen den Fahrzeugachsen des Zugfahrzeuges entlang der zentralen Längsachse des Zugfahrzeugs. Weiter ist ein fahrzeugseitiger Achse-Kupplung-Abstand vorbekannt oder wird der fahrzeugseitige Achse-Kupplung-Abstand bestimmt. Der fahrzeugseitige Achse-Kupplung-Abstand bezeichnet hierbei einen Abstand einer hinteren Achse oder heckseitigen Achse des Zugfahrzeuges von einem Mittelpunkt des Kupplungskopfes entlang der zentralen Längsachse des Zugfahrzeuges.

Der anhängerseitige Achse-Kupplung-Abstand wird in Abhängigkeit des aktuellen Radlenkwinkels, des aktuellen Anhänger-Knickwinkels, des fahrzeugseitigen Radstandes und des fahrzeugseitigen Achse-Kupplung-Abstands bestimmt. Hierbei wird die Bestimmung des anhängerseitigen Achse-Kupplung-Abstandes vorzugsweise ebenfalls während einer konstanten oder quasi-konstanten Kreisfahrt durchgeführt.

Hierdurch ergibt sich in vorteilhafter Weise, dass ein im Regelfall unbekannter anhängerseitiger Achse-Kupplung-Abstand während des Betriebes des Fahrzeuggespanns für einen beliebigen Anhänger bestimmt werden kann. Auch dieser derart bestimmte anhängerseitige Achse-Kupplung-Abstand kann dann einem Fahrerassistenzsystem zur Verfügung gestellt werden.

In einer weiteren Ausführungsform wird eine konstante oder quasi-konstante Kreisfahrt detektiert, falls sich ein Radlenkwinkel und/oder eine Gierrate des Zugfahrzeuges in einem vorbestimmten Zeitintervall nicht oder weniger als ein vorbestimmtes Maß ändert. Hierbei kann das vorgeschlagene Verfahren genau dann ausgeführt werden, wenn eine konstante oder quasi-konstante Kreisfahrt detektiert wird. Das Verfahren kann abgebrochen werden oder ein Ergebnis des Verfahrens kann verworfen werden, falls während einer Ausführung des Verfahrens eine Abweichung von der konstanten oder quasi-konstanten Kreisfahrt detektiert wird, beispielsweise falls sich ein Radlenkwinkel um mehr als das vorbestimmte Maß ändert.

Hierdurch ergibt sich in vorteilhafter Weise eine einfache Detektion einer Kreisfahrt, die eine Bedingung für die erfindungsgemäße Bestimmung der Gesamtlänge des Anhängers ist.

Weiter vorgeschlagen wird eine Vorrichtung zur Bestimmung einer Gesamtlänge eines Anhängers eines Fahrzeuggespanns. Das Fahrzeuggespann umfasst ein Zugfahrzeug und den mit dem Zugfahrzeug gekoppelten Anhänger. Die Vorrichtung umfasst weiter mindestens eine Auswerteeinrichtung. In einem ersten Schritt ist ein anhängerseitiger Achse-Kupplung-Abstand bestimmbar, beispielsweise mittels der Auswerteeinrichtung.

Erfindungsgemäß umfasst die Vorrichtung mindestens eine Einrichtung zur Erfassung einer Bewegung eines Hecks des Anhängers. In einem zweiten Schritt ist während einer konstanten oder quasi-konstanten Kreisfahrt ein Bewegungsvektor der Bewegung des Hecks des Anhängers bestimmbar. Der Bewegungsvektor repräsentiert eine Richtung und eine Geschwindigkeit des Hecks des Anhängers relativ zu einer Fahrbahnoberfläche. Mittels der Auswerteeinrichtung ist dann in Abhängigkeit der Richtung und der Geschwindigkeit ein anhängerseitiger Achse-Heck-Abstand bestimmbar, wobei mittels der Auswerteeinrichtung die Gesamtlänge als Summe des anhängerseitigen Achse-Kupplung-Abstands und des anhängerseitigen Achse-Heck-Abstands bestimmbar ist.

Mittels der vorgeschlagenen Vorrichtung ist in vorteilhafter Weise eines der vorhergehend beschriebenen Verfahren ausführbar.

In einer weiteren Ausführungsform ist die Einrichtung zur Erfassung einer Bewegung des Hecks eine am Heck des Anhängers angeordnete Kamera. Hierdurch lässt sich in besonders vorteilhafter Weise eine einfache Bestimmung des vorhergehend beschriebenen Bewegungsvektors durchführen, wobei die am Heck angeordnete Kamera auch für weitere einen Betrieb des Fahrzeuggespanns unterstützende Funktionen nutzbar ist.

In einer weiteren Ausführungsform umfasst die Vorrichtung zusätzlich eine Einrichtung zur Bestimmung eines Radlenkwinkels und eine Einrichtung zur Bestimmung eines Anhänger-Knickwinkels. Die Einrichtung zur Bestimmung eines Anhänger-Knickwinkels kann hierbei eine Kamera und/oder einen am Kupplungskopf angeordneten Drehwinkelsensor umfassen, mittels derer der vorhergehend beschriebene Anhänger-Knickwinkel bestimmt werden kann.

Ein fahrzeugseitiger Radstand ist vorbekannt oder bestimmbar. Weiter ist ein fahrzeugseitiger Achse-Kupplung-Abstand vorbekannt oder bestimmbar.

Mittels der Auswerteeinrichtung ist dann der anhängerseitige Achse-Kupplung-Abstand in Abhängigkeit des aktuellen Radlenkwinkels, des aktuellen Anhänger-Knickwinkels, des fahrzeugseitigen Radstandes und des fahrzeugseitigen Achse-Kupplung-Abstandes bestimmbar.

Mittels der vorgeschlagenen Vorrichtung kann in vorteilhafter Weise auch eine Bestimmung des anhängerseitigen Achse-Kupplung-Abstands während eines Betriebes des Fahrzeuggespannes durchgeführt werden.

Die Erfindung wird anhand eines Ausführungsbeispiels näher erläutert. Die einzige Figur zeigt eine schematische Darstellung eines Fahrzeuggespannes.

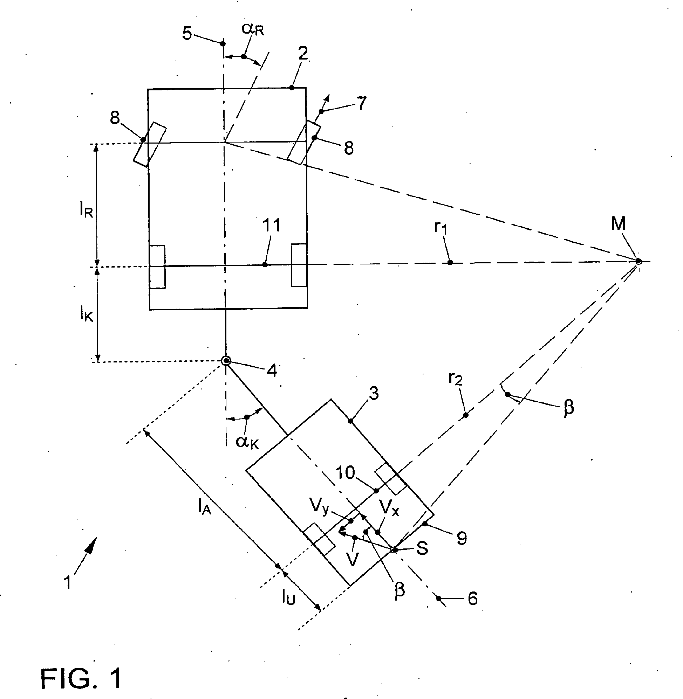

In Fig. 1 ist schematisch ein Fahrzeuggespann 1 dargestellt. Das Fahrzeuggespann 1 umfasst ein Zugfahrzeug 2 und einen einachsigen Anhänger 3. Das Zugfahrzeug 2 weist eine Anhängerkupplung mit einem Kupplungskopf 4 auf. Eine Kupplungskopfaufnahme des Anhängers 3 ist hierbei derart mit dem Kupplungskopf 4 verbunden, dass der Anhänger 3 schwenkbar um den Kupplungskopf 4 des Zugfahrzeugs 2 ist.

Weiter dargestellt ist ein fahrzeugseitiger Radstand $l_R$ und ein fahrzeugseitiger Achse-Kupplung-Abstand $l_K$, wobei diese Größen als bekannt vorausgesetzt werden. Weiter dargestellt ist eine zentrale Längsachse 5 des Zugfahrzeugs 2 und eine zentrale Längsachse 6 des Anhängers 3. Weiter dargestellt ist ein Bewegungsvektor 7 von lenkbaren Rädern 8 des Zugfahrzeuges 2, wobei ein Radlenkwinkel $\alpha_R$ einen Winkel zwischen der zentralen Längsachse 5 des Zugfahrzeuges 2 und dem Bewegungsvektor 7 bezeichnet. Weiter dargestellt ist ein Anhänger-Knickwinkel $\alpha_K$, der einen Winkel zwischen der zentralen Längsachse 5 des Zugfahrzeuges 2 und der zentralen Längsachse 6 des Anhängers 3 bezeichnet.

Weiter dargestellt ist ein anhängerseitiger Achse-Kupplung-Abstand $l_A$ und der erfindungsgemäß zu bestimmende anhängerseitige Achse-Heck-Abstand $l_U$.

Weiter dargestellt ist ein Heck 9 des Anhängers 3 und ein Schnittpunkt S der zentralen Längsachse 6 des Anhängers 3 mit dem Heck 9 des Anhängers 3. Mittels einer nicht dargestellten Kamera, die an dem Heck 9 des Anhängers 3 befestigt werden kann, ist ein Bewegungsvektor v des Hecks 9 des Anhängers 3 relativ zu einer nicht dargestellten Fahrbahnoberfläche bestimmbar, wobei der Bewegungsvektor eine Richtung und eine Geschwindigkeit des Schnittpunktes S, also auch des Hecks 9 des Anhängers 3, relativ zu der nicht dargestellten Fahrbahnoberfläche repräsentiert.

Der Bewegungsvektor v ist in einen ersten Teilvektor $v_x$ und einen zweiten Teilvektor $v_y$ unterteilbar, wobei der erste Teilvektor $v_x$ eine Geschwindigkeit des Hecks 9, insbesondere des Schnittpunkts S, des Anhängers 3 in Richtung der zentralen Längsachse 6 des Anhängers 3 repräsentiert. Der zweite Teilvektor $v_y$ repräsentiert eine Geschwindigkeit des Hecks 9, insbesondere des Schnittpunkts S des Anhängers 3 senkrecht zu der zentralen Längsachse 6 und parallel zu einer Anhängerachse 10.

Der anhängerseitige Achse-Heck-Abstand $l_U$ bestimmt sich dann gemäß

$$l_U = r_1 \cdot (v_y/v_x) \qquad\qquad \text{Formel 1.}$$

Hierbei bezeichnet $r_1$ einen Radius einer konstanten oder quasi-konstanten Kreisfahrt um einen Mittelpunkt M. In Fig. 1 ist der Radius $r_1$ als Abstand zwischen einem Schnittpunkt der zentralen Längsachse 5 des Zugfahrzeuges 2 und einer hinteren Fahrzeugachse 11 des Zugfahrzeuges 2 dargestellt. Der Radius $r_1$ entspricht einem Radius $r_2$, der als Abstand zwischen dem Mittelpunkt M und einem Schnittpunkt zwischen der zentralen Längsachse 6 des Anhängers und der Anhängerachse 10 dargestellt ist.

Weiter in Fig. 1 dargestellt ist ein Winkel $\beta$, wobei gilt

$$\tan\beta = (l_U/r_2) = (l_U/r_1) \qquad\qquad \text{Formel 2.}$$

Die erfindungsgemäße Gesamtlänge des Anhängers 3 ergibt sich dann als Summe des anhängerseitigen Achse-Kupplung-Abstands $l_A$ und des gemäß Formel 1 bestimmten anhängerseitigen Achse-Heck-Abstands $l_U$.

Der anhängerseitige Achse-Kupplung-Abstand $l_A$ lässt sich in Abhängigkeit des Radlenkwinkels $\alpha_R$, des Anhänger-Knickwinkels $\alpha_K$, des fahrzeugseitigen Radstandes $l_R$ und des fahrzeugseitigen Achse-Kupplung-Abstands $l_K$ bestimmen gemäß

$$l_A = l_K \cos\alpha_K - (l_R \sin\alpha_K) / \tan\alpha_R \qquad\qquad \text{Formel 3.}$$

**Bezugszeichenliste**

1 Fahrzeuggespann
2 Zugfahrzeug
3 Anhänger
4 Kupplungskopf
5 zentrale Längsachse des Zugfahrzeuges
6 zentrale Längsachse des Anhängers
7 Bewegungsvektor der lenkbaren Räder

| 8 | lenkbare Räder |
|---|---|
| 9 | Heck des Anhängers |
| 10 | Anhängerachse |
| 11 | hintere Fahrzeugachse |
| $\alpha_R$ | Radlenkwinkel |
| $\alpha_K$ | Anhänger-Knickwinkel |
| $\beta$ | Winkel |
| $I_R$ | Radstand |
| $I_K$ | fahrzeugseitiger Achse-Kupplung-Abstand |
| $I_A$ | anhängerseitiger Achse-Kupplung-Abstand |
| $I_U$ | anhängerseitiger Achse-Heck-Abstand |
| $r_1$ | Radius |
| $r_2$ | Radius |
| v | Bewegungsvektor des Hecks des Anhängers |
| vx | erster Teilvektor |
| $v_y$ | zweiter Teilvektor |
| S | Schnittpunkt |

**Patentansprüche**

1. Verfahren zur Bestimmung einer Gesamtlänge eines Anhängers (3) eines Fahrzeuggespanns (1), wobei das Fahrzeuggespann (1) ein Zugfahrzeug (2) und den mit dem Zugfahrzeug (2) gekoppelten Anhänger (3) umfasst, wobei in einem ersten Schritt ein anhängerseitiger Achse-Kupplung-Abstand ($I_A$) bestimmt wird,

   **dadurch gekennzeichnet, dass**
   in einem zweiten Schritt während einer konstanten oder quasi-konstanten Kreisfahrt ein Bewegungsvektor (v) einer Bewegung eines Hecks (9) des Anhängers (3) bestimmt wird, wobei der Bewegungsvektor (v) eine Richtung und eine Geschwindigkeit des Hecks (9) des Anhängers (3) relativ zu einer Fahrbahnoberfläche repräsentiert, wobei in Abhängigkeit der Richtung und der Geschwindigkeit ein anhängerseitiger Achse-Heck-Abstand ($I_U$) bestimmt wird, wobei die Gesamtlänge als Summe des anhängerseitigen Achse-Kupplung-Abstands ($I_A$) und des anhängerseitigen Achse-Heck-Abstands ($I_U$) bestimmt wird.

2. Verfahren nach Anspruch 1, **dadurch gekennzeichnet, dass** der Bewegungsvektor (v) in einen ersten Teilvektor ($v_x$) und einen zweiten Teilvektor ($v_y$) unterteilt wird, wobei der erste Teilvektor ($v_x$) eine Geschwindigkeit des Hecks (9) des Anhängers (3) in Längsrichtung des Anhängers (3) repräsentiert, wobei der zweite Teilvektor ($v_y$) eine Geschwindigkeit des Hecks (9) des Anhängers (3) senkrecht zur Längsrichtung und parallel zu einer Anhängerachse (10) des Anhängers (3) repräsentiert, wobei der anhängerseitige Achse-Heck-Abstand ($I_U$) in Abhängigkeit des ersten und des zweiten Teilvektors ($v_x, v_y$) bestimmt wird.

3. Verfahren nach Anspruch 2, **dadurch gekennzeichnet, dass** der anhängerseitige Achse-Heck-Abstand ($I_U$) als Produkt eines Radius ($r_1$, $r_2$) der Kreisfahrt und einem Geschwindigkeits-Quotienten bestimmt wird, wobei ein Dividend des Geschwindigkeits-Quotienten der zweite Teilvektor ($v_y$) und der Divisor des Geschwindigkeits-Quotienten der erste Teilvektor ($v_x$) ist.

4. Verfahren nach einem der Ansprüche 1 bis 3, **dadurch gekennzeichnet, dass** der Bewegungsvektor (v) kamerabasiert erfasst wird.

5. Verfahren nach Anspruch 4, **dadurch gekennzeichnet, dass** eine Kamera zur Erfassung des Bewegungsvektors (v) an dem Heck (9) des Anhängers (3) angeordnet ist.

6. Verfahren nach einem der Ansprüche 1 bis 5, **dadurch gekennzeichnet, dass** zur Bestimmung des anhängerseitigen Achse-Kupplung-Abstands ($I_A$) ein Radlenkwinkel ($\alpha_R$) und ein Anhänger-Knickwinkel ($\alpha_K$) erfasst wird, wobei weiter ein fahrzeugseitiger Radstand ($I_R$) vorbekannt ist oder bestimmt wird, wobei weiter ein fahrzeugseitiger Achse-Kupplung-Abstand ($I_K$) vorbekannt ist oder bestimmt wird, wobei der anhängerseitige Achse-Kupplung-Abstand ($I_A$) in Abhängigkeit des aktuellen Radlenkwinkels ($\alpha_R$), des aktuellen Anhänger-Knickwinkels ($\alpha_K$), des fahrzeugseitigen Radstandes ($I_R$) und des fahrzeugseitigen Achse-Kupplung-Abstands ($I_K$) bestimmt wird.

7. Verfahren nach einem der Ansprüche 1 bis 6, **dadurch gekennzeichnet, dass** eine konstante oder quasi-konstante Kreisfahrt detektiert wird, falls sich ein Radlenkwinkel ($\alpha_R$) und/oder eine Gierrate des Zugfahrzeuges (2) in einem vorbestimmten Zeitintervall nicht oder weniger als ein vorbestimmtes Maß ändert.

**8.** Vorrichtung zur Bestimmung einer Gesamtlänge eines Anhängers (3) eines Fahrzeuggespanns (1), wobei das Fahrzeuggespann (1) ein Zugfahrzeug (2) und den mit dem Zugfahrzeug (2) gekoppelten Anhänger (3) umfasst, wobei die Vorrichtung mindestens eine Auswerteeinrichtung umfasst, wobei in einem ersten Schritt ein anhängerseitiger Achse-Kupplung-Abstand ($l_A$) bestimmbar ist,
**dadurch gekennzeichnet, dass**
die Vorrichtung mindestens eine Einrichtung zur Erfassung einer Bewegung eines Hecks (9) des Anhängers (3) umfasst, wobei in einem zweiten Schritt bei einer konstanten oder quasi-konstanten Kreisfahrt ein Bewegungsvektor (v) der Bewegung des Hecks (9) des Anhängers (3) bestimmbar ist, wobei der Bewegungsvektor (v) eine Richtung und eine Geschwindigkeit des Hecks (9) des Anhängers (3) relativ zu einer Fahrbahnoberfläche repräsentiert, wobei mittels der Auswerteeinrichtung in Abhängigkeit der Richtung und der Geschwindigkeit ein anhängerseitiger Achse-Heck-Abstand ($l_U$) bestimmbar ist, wobei mittels der Auswerteeinrichtung die Gesamtlänge als Summe des anhängerseitigen Achse-Kupplung-Abstands ($l_A$) und des anhängerseitigen Achse-Heck-Abstands ($l_U$) bestimmbar ist.

**9.** Vorrichtung nach Anspruch 8, **dadurch gekennzeichnet, dass** die Einrichtung zur Erfassung einer Bewegung des Hecks (9) eine am Heck (9) des Anhängers (3) angeordnete Kamera ist.

**10.** Vorrichtung nach Anspruch 8 oder 9, **dadurch gekennzeichnet, dass** die Vorrichtung weiter eine Einrichtung zur Bestimmung eines Radlenkwinkels ($\alpha_R$) und eine Einrichtung zur Bestimmung eines Anhänger-Knickwinkels ($\alpha_K$) umfasst, wobei zur Bestimmung des anhängerseitigen Achse-Kupplung-Abstand ($l_A$) ein Radlenkwinkel ($\alpha_R$) und ein Anhänger-Knickwinkel ($\alpha_K$) erfassbar, wobei ein fahrzeugseitiger Radstand ($l_R$) vorbekannt oder bestimmbar ist, wobei weiter ein fahrzeugseitiger Achse-Kupplung-Abstand ($l_K$) vorbekannt oder bestimmbar ist, wobei mittels der Auswerteeinrichtung der anhängerseitige Achse-Kupplung-Abstand ($l_A$) in Abhängigkeit des aktuellen Radlenkwinkels ($\alpha_R$), des aktuellen Anhänger-Knickwinkels ($\alpha_K$), des fahrzeugseitigen Radstandes ($l_R$) und des fahrzeugseitigen Achse-Kupplung-Abstandes ($l_K$) bestimmbar ist.

## Claims

**1.** Method for determining the total length of a trailer (3) of a vehicle-trailer combination (1), wherein the vehicle-trailer combination (1) comprises a towing vehicle (2) and the trailer (3) which is coupled to the towing vehicle (2), wherein in a first step a trailer-side axis-hitch distance ($l_A$) is determined,
**characterized in that**
in a second step during constant or quasi-constant circular travel a movement vector (v) of a movement of a rear part (9) of the trailer (3) is determined, wherein the movement vector (v) represents a direction and a speed of the rear part (9) of the trailer (3) relative to a carriageway surface, wherein a trailer-side axis-rear part distance ($l_U$) is determined as a function of the direction and the speed, wherein the total length is determined as a sum of the trailer-side axis-hitch distance ($l_A$) and the trailer-side axis-rear part distance ($l_U$).

**2.** Method according to Claim 1, **characterized in that** the movement vector (v) is divided into a first partial vector ($v_x$) and a second partial vector ($v_y$), wherein the first partial vector ($v_x$) represents a speed of the rear part (9) of the trailer (3) in the longitudinal direction of the trailer (3), wherein the second partial vector ($v_y$) represents a speed of the rear part (9) of the trailer (3) perpendicularly with respect to the longitudinal direction and parallel to a trailer axis (10) of the trailer (3), wherein the trailer-side axis-rear part distance ($l_U$) is determined as a function of the first and second partial vectors ($v_x$, $v_y$).

**3.** Method according to Claim 2, **characterized in that** the trailer-side axis-rear part distance ($l_U$) is determined as a product of a radius ($r_1$, $r_2$) of the circular travel and a speed quotient, wherein a dividend of the speed quotient is the second partial vector ($v_y$), and the divisor of the speed quotient is the first partial vector ($v_x$).

**4.** Method according to one of Claims 1 to 3, **characterized in that** the movement vector (v) is sensed in a camera-based fashion.

**5.** Method according to Claim 4, **characterized in that** a camera for sensing the movement vector (v) is arranged on the rear part (9) of the trailer (3).

6. Method according to one of Claims 1 to 5, **characterized in that** a wheel steering angle ($\alpha_R$) and a trailer bending angle ($\alpha_K$) are sensed in order to determine the trailer-side axis-hitch distance ($l_A$), wherein in addition a vehicle-side wheel base ($l_R$) is previously known or determined, wherein in addition a vehicle-side axis-hitch distance ($l_K$) is previously known or determined, wherein the trailer-side axis-hitch distance ($l_A$) is determined as a function of the current wheel steering angle ($\alpha_R$), the current trailer bending angle ($\alpha_K$), the vehicle-side wheel base ($l_R$) and the vehicle-side axis-hitch distance ($l_K$).

7. Method according to one of Claims 1 to 6, **characterized in that** constant or quasi-constant circular travel is detected if a wheel steering angle ($\alpha_R$) and/or a yaw rate of the towing vehicle (2) does not change in a predetermined time interval or changes by less than a predetermined amount.

8. Device for determining the total length of a trailer (3) of a vehicle-trailer combination (1), wherein the vehicle-trailer combination (1) comprises a towing vehicle (2) and the trailer (3) which is coupled to the towing vehicle (2), wherein the device comprises at least one evaluation apparatus, wherein in a first step a trailer-side axis-hitch distance ($l_A$) can be determined,
**characterized in that**
the device comprises at least one apparatus for sensing a movement of a rear part (9) of the trailer (3), wherein in a second step in the case of constant or quasi-constant circular travel a movement vector (v) of the movement of the rear part (9) of the trailer (3) can be determined, wherein the movement vector (v) represents a direction and a speed of the rear part (9) of the trailer (3) relative to a carriageway surface, wherein a trailer-side axis-rear part distance ($l_U$) can be determined as a function of the direction and the speed by means of the evaluation apparatus, wherein the total length can be determined as a sum of the trailer-side axis-hitch distance ($l_A$) and the trailer-side axis-rear part distance ($l_U$) by means of the evaluation apparatus.

9. Device according to Claim 8, **characterized in that** the apparatus for sensing a movement of the rear part (9) is a camera which is arranged on the rear part (9) of the trailer (3).

10. Device according to Claim 8 or 9, **characterized in that** the device also comprises an apparatus for determining a wheel steering angle ($\alpha_R$) and an apparatus for determining a trailer bending angle ($\alpha_K$), wherein a wheel steering angle ($\alpha_R$) and a trailer bending angle ($\alpha_K$) can be sensed in order to determine the trailer-side axis-hitch distance ($l_A$), wherein a vehicle-side wheel base ($l_R$) is previously known or can be determined, wherein in addition a vehicle-side axis-hitch distance ($l_K$) is previously known or can be determined, wherein the trailer-side axis-hitch distance ($l_A$) can be determined by means of the evaluation apparatus as a function of the current wheel steering angle ($\alpha_R$), the current trailer bending angle ($\alpha_K$), the vehicle-side wheel base ($l_R$) and the vehicle-side axis-hitch distance ($l_K$).

**Revendications**

1. Procédé pour déterminer une longueur totale d'une remorque (3) d'un attelage de véhicule (1), l'attelage de véhicule (1) comprenant un véhicule tracteur (2) et la remorque (3) couplée au véhicule tracteur (2), un écartement essieu-couplage ($l_A$) du côté de remorque étant déterminé lors d'une première étape ; **caractérisé en ce que** :

un vecteur de mouvement (v) d'un mouvement d'un arrière (9) de la remorque (3) est déterminé lors d'une deuxième étape, pendant une conduite en cercle constante ou quasi-constante, le vecteur de mouvement (v) représentant une direction et une vitesse de l'arrière (9) de la remorque (3) par rapport à une surface de couloir de conduite, sachant qu'un écartement essieu-arrière ($l_U$) du côté de remorque est déterminé en fonction de la direction et de la vitesse, la longueur totale prenant la forme de la somme de l'écartement essieu-couplage ($l_A$) du côté de remorque et de l'écartement essieu-arrière ($l_U$) du côté de remorque.

2. Procédé selon la revendication 1, **caractérisé en ce que** le vecteur de mouvement (v) est subdivisé en un premier vecteur partiel ($v_x$) et en un deuxième vecteur partiel ($v_y$), le premier vecteur partiel ($v_x$) représentant une vitesse de l'arrière (9) de la remorque (3) dans la direction longitudinale de la remorque (3), le deuxième vecteur partiel ($v_y$) représentant une vitesse de l'arrière (9) de la remorque (3) perpendiculairement à la direction longitudinale et parallèlement à un essieu de remorque (10) de la remorque (3), l'écartement essieu-arrière ($l_U$) du côté de remorque étant déterminé en fonction du premier et du deuxième vecteur partiel ($v_x$, $v_y$).

3. Procédé selon la revendication 2, **caractérisé en ce que** l'écartement essieu-arrière ($l_U$) du côté de remorque prend la forme du produit d'un rayon ($r_1$, $r_2$) de la conduite en cercle et d'un quotient de vitesse, un dividende du quotient de vitesse étant le deuxième vecteur partiel ($v_y$) et le diviseur du quotient de vitesse étant le premier vecteur partiel ($v_x$).

4. Procédé selon l'une quelconque des revendications 1 à 3, **caractérisé en ce que** le vecteur de mouvement (v) est déterminé sur la base d'une caméra.

5. Procédé selon la revendication 4, **caractérisé en ce qu'**une caméra est disposée au niveau de l'arrière (9) de la remorque (3) pour détecter le vecteur de mouvement (v).

6. Procédé selon l'une quelconque des revendications 1 à 5, **caractérisé en ce qu'**un angle de braquage de roue ($\alpha_R$) et un angle de pli de remorque ($\alpha_K$) est détecté pour déterminer l'écartement essieu-couplage ($I_A$) du côté de remorque, un état de roue ($I_R$) du côté de véhicule étant en sus connu au préalable ou déterminé, un écartement essieu-couplage ($I_K$) du côté de véhicule étant en sus connu au préalable ou déterminé, l'écartement essieu-couplage ($I_A$) du côté de remorque étant déterminé en fonction de l'angle de braquage de roue ($\alpha_R$) actuel, de l'angle de pli de remorque ($\alpha_K$) actuel, de l'état de roue ($I_R$) du côté de véhicule et de l'écartement essieu-couplage ($I_K$) du côté de véhicule.

7. Procédé selon l'une quelconque des revendications 1 à 6, **caractérisé en ce qu'**une conduite en cercle constante ou quasi-constante est détectée si un angle de braquage de roue ($\alpha_R$) et/ou une vitesse de lacet du véhicule tracteur (2) ne varie pas pendant un intervalle de temps prédéterminé ou est inférieur à une mesure prédéterminée.

8. Dispositif pour déterminer une longueur totale d'une remorque (3) d'un attelage de véhicule (1), l'attelage de véhicule (1) comprenant un véhicule tracteur (2) et la remorque (3) couplée au véhicule tracteur (2), le dispositif comprenant au moins un dispositif d'analyse, l'écartement essieu-couplage ($I_A$) du côté de remorque étant déterminé lors d'une première étape ;
   **caractérisé en ce que** :

   le dispositif comprend au moins un dispositif de détection d'un mouvement d'un arrière (9) de la remorque (3), un vecteur de mouvement (v) du mouvement de l'arrière (9) de la remorque (3) pouvant être déterminé lors d'une deuxième étape en présence d'une conduite en cercle constante ou quasi-constante, le vecteur de mouvement (v) représentant une direction et une vitesse de l'arrière (9) de la remorque (3) par rapport à une surface de couloir de conduite, sachant qu'un écartement essieu-arrière ($I_U$) du côté de remorque peut être déterminé à l'aide du dispositif d'analyse en fonction de la direction et de la vitesse, sachant que la longueur totale peut être déterminée à l'aide du dispositif d'analyse sous la forme de la somme de l'écartement essieu-couplage ($I_A$) du côté de remorque et de l'écartement essieu-arrière ($I_U$) du côté de remorque.

9. Dispositif selon la revendication 8, **caractérisé en ce que** le dispositif de détection d'un mouvement de l'arrière (9) est une caméra disposée au niveau de l'arrière (9) de la remorque (3).

10. Dispositif selon la revendication 8 ou 9, **caractérisé en ce que** le dispositif comprend en outre un dispositif pour déterminer un angle de braquage de roue ($\alpha_R$) et un dispositif pour déterminer un angle de pli de remorque ($\alpha_K$), sachant qu'un angle de braquage de roue ($\alpha_R$) et un angle de pli de remorque ($\alpha_K$) peuvent être détectés pour déterminer l'écartement essieu-couplage ($I_A$) du côté de remorque, un état de roue ($I_R$) du côté de véhicule étant connu au préalable ou pouvant être déterminé, sachant qu'un écartement essieu-couplage ($I_K$) du côté de véhicule est en sus connu au préalable ou peut être déterminé, l'écartement essieu-couplage ($I_A$) du côté de remorque pouvant être déterminé à l'aide du dispositif d'analyse en fonction de l'angle de braquage de roue ($\alpha_R$) actuel, de l'angle de pli de remorque ($\alpha_K$) actuel, de l'état de roue ($I_R$) du côté de véhicule et de l'écartement essieu-couplage ($I_K$) du côté de véhicule.

**FIG. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1593552 B1

- DE 102009007990 A1